# EUROPEAN PATENT SPECIFICATION

(11) **EP 0 447 023 B1**
(45) Date of publication and mention of the grant of the patent: **27.07.1994**
(21) Application number: 91300455.2
(22) Date of filing: 21.01.1991
(51) Int. Cl.: F16L 37/28

(54) **Dry-break pipe coupling**
Trockentrennkupplung für Leitungen
Raccord détachable sans perte pour conduites

(30) Priority: 22.01.1990 US 468351
(43) Date of publication of application: 18.09.1991
(73) Proprietor: VICTAULIC COMPANY OF AMERICA, Easton Pennsylvania 18042 (US)
(72) Inventor: McLennan, William Ross, Easton, Pennsylvania 18042 (US)
(74) Representative: Stoner, Gerard Patrick

(56) References cited:
- DE-B- 1 034 936
- US-A- 2 458 899
- US-A- 2 712 454
- US-A- 3 106 223

## Description

This invention relates to a separable coupling of particular use in interconnecting lengths of hose or rigid piping used for conveying flammable liquids and gasses, such as gasoline, aviation fuel, kerosene, gasohol, diesel or fuel oil, natural gas, propane, and the like, and in any other application in which spillage of the conveyed liquid or gas is to be reduced to the smallest possible amount, and preferably zero definable volume of the conveyed liquid or gas upon the separation of the respective halves of the coupling.

Such couplings find application in the assembly of temporary fuel lines to aircraft, motor vehicles, ships and the like, the necessary supply line being established by connecting an appropriate number of hoses or pipelines one to the other, and then connecting the assembled hose or pipe line to a nipple provided as a fixture on the aircraft, motor vehicle, ship or the like.

Throughout the discussion of this invention, the term "coupling half" is used to denote either a coupling half which is configured and specifically adapted for connection to the end of a hose or pipeline, or, a nipple that is specifically intended to be a fixture providing an outlet for a supply tank, or, a fixture providing an inlet to a storage tank.

While the invention is specifically described as related to the conveying of gasoline or other flammable liquids, it is not limited to such applications, but also finds application in the handling of valuable materials, or the handling of toxic or noxious substances, including sewage sludge, caustic or acidic materials, fluid suspensions of insecticides, infectious materials, radioactive materials, chemicals and solvents or any other application in which spillage of the fluid material is to be minimized to the greatest possible extent upon separation of the halves of the separable coupling.

### Background of the Art

A general requirement of such couplings is that the respective halves of the coupling each incorporate a valve that can be opened when the coupling halves are properly connected one to the other, and, which must be moved to a fully closed condition before the respective halves of the coupling can be separated one from the other. This is in order that fluid material present in the respective hoses, pipes or nipple, and which probably is under pressure, shall remain trapped within the hose, pipe or nipple and restrained against spillage upon separation of the coupling halves. In some circumstances, such as the top filling of storage tanks, only one of the couplings may be required.

The provision of such valves, while relatively simple in basic concept, poses unusual problems in the practical application of that concept. Only the smallest possible amount and preferably zero of the flammable or noxious liquid can be permitted to remain trapped between the respective valves when the valves are in their closed position, since the trapped liquid will be released to atmosphere or spilled onto the ground upon the separation of the coupling halves.

A desirable requirement is that the interconnecting members of the respective coupling halves be identical in all or at least in sufficient respects that any one coupling half can be connected to any other coupling half or to a corresponding connecting nipple, i.e., that the coupling halves be "sexless" or hermaphroditic in all respects, to the total avoidance of male-only coupling halves and female-only coupling halves. Dissimilar coupling halves carry the penalty that only one selected of a hose can be connected to a corresponding selected one end of another hose, or, to a corresponding selected nipple. Reversal of the ends of a hose having dissimilar coupling halves at its respective ends would preclude the assembly of that hose to another hose or nipple having interconnections corresponding with that at the said one selected end of that hose.

Preferably, some form of locking mechanism is provided that precludes separation of the coupling halves until such time that the respective valves have been moved to their fully closed position, and which permits separation of the coupling halves only when the respective valves have reached their fully closed position.

US-A-3106223 (Cooper) describes a disconnectable coupling of the dry-break type in which each coupling half has a moveable valve plate which, when transverse to the flow direction, closes off the coupling half in a flush manner, and is mounted via a shaft through an aperture in the coupling half housing body. The shaft is connected to a retractable closure-locking element through a toothed connection, so that rotation of the closure element rotates the shaft - which lies at 45° to the XY plane of the coupling face - and swings the valve plate through 180° to the open position. The two-part form of the present claims is based on this disclosure as the closest prior disclosure.

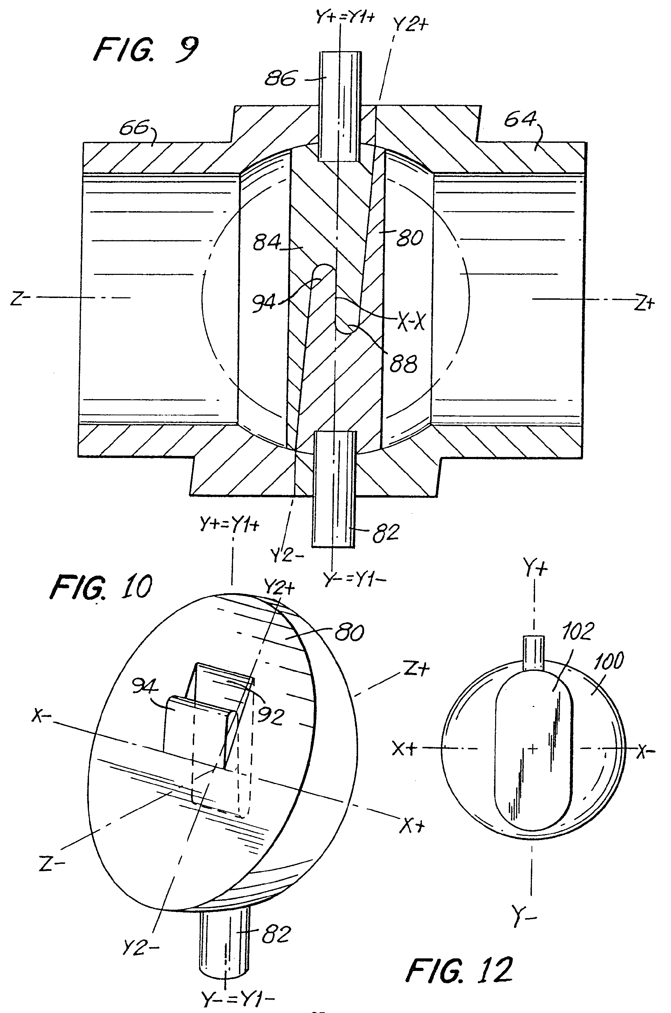

US-A-2712454 (Love) describes a self-sealing coupling in which each of the coupling half housings contains part of a rotatable ball having peripheral or central cut-out portions to enable through-flow. Of the various embodiments, that of Figs. 11 and 12 enables at least substantially a "dry-break", but requires 180° turn between open and closed conditions.

US-A-2458899 (Doubrava) describes a coupling in which each coupling half contributes half of a rotatable cylinder containing a central bored tube which can be swung a quarter-turn between open and closed conditions. "Ears" on the housing overlap the ends of the (fluid-filled) bore when this is in the closed condition. No seals are provided for this, however. The coupling cannot be made with two identical coupling halves.

It would be desirable in one aspect to provide a novel form of butterfly valve, having particular utility in couplings of the separable type, and which can be employed to provide a true dry-break coupling, in which zero or an insignificant minimum of spillage of the conveyed fluid occurs upon separation of the coupling halves.

In another aspect, it would be desirable to provide a separable coupling for establishing hose to hose connections or hose to nipple connections, in which the residual void present between the respective closure valves, when in their closed position, is reduced to an insignificant minimum and up to the point of total elimination.

It would also be preferable to retain the desirable advantages of "sexless" or hermaphroditic couplings of a configuration identical one to the other, and which will permit the assembly of any one coupling half to any other coupling half, or, to any other structure provided with such a coupling half.

Furthermore, it is preferable to provide a separable coupling in which restraint on fluid flow through the coupling is minimized to the greatest possible extent in the open condition.

Such a coupling and valve would preferably provide for ease of servicing and cleaning in the event that such is required, be of elegant simplicity and resistive to damage caused by rough handling of the respective coupling halves.

In larger sizes providing for high rates of fluid flow, coupling halves may be of substantial weight, and are thus prone to being accidentally dropped. Also, commonly such couplings are to be employed in hostile environments, such as desert, beach conditions, or field conditions with the possibility that the coupling half will be dropped into sand, dirt or mud. If this should happen, the coupling could preferably be cleaned by a workman merely wiping contaminants from the operative face of the coupling.

Another preferred object is to provide a separable coupling than can operate at elevated pressures.

Also, it would be desirable to provide a coupling and valve construction which operated so as not to cause undesirable stress and wear on seals comprised in it.

In one aspect, the invention provides a valve-controlled dry-break coupling member for forming a coupling connecting a conduit to another such coupling member, and comprising
a body having a fluid passage extending therethrough in a longitudinal coupling direction defining a central Z axis, the body having a transverse end face for complementarily engaging and sealing against a corresponding end face of a body of the other coupling member in use to form an enclosed conduit;
a movable valve plate positioned in the fluid passage and mounted rotatably to the body by a shaft engagement, the rotation axis of which passes through a centre of the coupling member where transverse X and Y axes intersect the Z axis, and about which the valve plate is rotatable between
(i) a fully closed transversely-aligned condition in which a sealing periphery of the valve plate seals against the inside of the body to sealingly close the end of the fluid passage, and
(ii) a fully open longitudinally-aligned condition in which flow can occur along the fluid passage around the valve plate,

the valve plate having a side face to abut face-to-face against a complementary side face of a corresponding and co-rotatable valve plate of said other coupling member, to prevent trapping between them of fluid from the fluid passage and thereby enable a dry break of the coupling,
characterised in that
the rotation axis extends in the Y axis direction whereby the valve plate rotates a quarter turn between the fully closed and fully open conditions.

In another aspect, the invention provides a valve-controlled dry-break coupling member for forming a coupling connecting a conduit to a another such coupling member, and comprising
a body having a fluid passage extending therethrough in a longitudinal coupling direction defining a central Z axis, the body having a transverse end face for complementarily engaging and sealing against a corresponding end face of a body of the other coupling member in use
to form an enclosed conduit;
a movable valve plate positioned in the fluid passage and mounted rotatably to the body by a shaft engagement, the rotation axis of which passes through a centre of the coupling member where transverse X and Y axes intersect the Z axis, and about which the valve plate is rotatable between
(i) a fully closed transversely-aligned condition in which a sealing periphery of the valve plate seals against the inside of the body to sealingly close the end of the fluid passage, and
(ii) a fully open longitudinally-aligned condition in which flow can occur along the fluid passage around the valve plate,

the valve plate having a side face to seal face-to-face against a complementary side face of a corresponding and co-rotatable valve plate of said other coupling member, to prevent trapping between them of fluid from the fluid passage and thereby enable a dry break of the coupling,
characterised in that
the shaft rotation axis passes through said sealing periphery of the valve plate, whereby the valve plate rotates a quarter turn about the rotation axis in passing between the fully open condition and the fully closed condition.

A composite valve e.g. of butterfly valve type may be provided by dividing a conventional butterfly into two valve portions in the direction of the transverse X, Y plane of the butterfly valve. The division can be in one or more surfaces that are planar, or, of any other configuration, the requirement being that the surfaces of division are contained entirely within the body of the conventional butterfly valve, and, that they extend through the axially extending periphery of the butterfly valve at a location intermediate the side or sealing faces of that valve.

The butterfly valve itself can be in the form of a diametral chord of a cylinder, or, can be diametral chord of a sphere, or, a diametral chord of any other solid that is rotatable about a fixed axis preferably within its own envelope.

In its simplest form, the composite valve will be provided by two complementary plates arranged in juxtaposition, each of the plates having a stub shaft integral with or rigidly attached thereto, the respective stub shafts extending oppositely one from the other and being arranged with the longitudinal axis of the respective stub shafts coaxial. The plates may be identical.

The plates can be of rectangular form, or or circular form, or of any other shape, including an irregular shape, that is rotatable about a fixed axis.

The engaged side faces of the plates can lie in the X,Y plane, or, lie parallel thereto, or, be arranged at an angle to the X,Y plane.

The stub shafts can be affixed to the plates either at their outer periphery and on a diameter thereof, or, at a position spaced inwardly of their outer periphery and arranged at an acute angle to the medial plane of the associated disk.

Such an arrangement of the valve portions permits one of the valve portions to be incorporated into one half of a coupling for it to close a fluid flow passage through that coupling half, and, the other of the valve portions can be incorporated into the other half of a coupling for it to close a fluid flow passage through the other coupling half.

When the two coupling halves are brought together, then, the two valve portions can be rotated conjointly about their coaxially aligned stub shafts to open the fluid flow passage through the assembled complete coupling.

The respective coupling halves are each provided with a valve seat for cooperation with the periphery of the associated valve portion, and, which is identically configured to the outer periphery of the associated valve portion. Appropriate sealing members can be provided on the periphery of the associated valve portion, or on the valve seat, or, on both of those members.

The valve seats can be in the form of an axially short and axially straight surface, or, those valve seats can be in the form of a cylindrical surface, or, be in the form of a spherical surface, or as dictated by the surface developed by the composite valve upon rotation thereof about the axis of the respective stub shafts.

A preferred form of coupling according to the present invention has the form of a conventional butterfly valve with the valve disk in the closed position, that has been cut through the housing, valve disk, and valve stem on an inclined plane extending through the housing, through the periphery of the valve disk and the body of the valve disk. As will be explained later, such a plane or surface can commence in either the Z+ or Z- direction and translate through the Y-Y axis to the Z- or Z+ direction, i.e., it traverses the X, Y plane that includes the Y-Y axis of rotation of the valve disc.

This provides coupling halves that are entirely complementary one to the other at the cut face, and which can be attached one to the other by any suitable connecting means to restore the butterfly valve to its initial configuration. When so secured one to the other, the coupling members and the contained valve disk provide, theoretically zero free space between the ends of the coupling members and zero free space between the juxtaposed side faces of the valve disk. Any attempted seepage of the conveyed fluid can be eliminated by providing suitable seals on the end faces of the coupling members and on the side faces of the respective halves of the valve disk.

While it is required that theoretically zero free space exists between the juxtaposed side faces of the valve disk, in certain configurations of the valve disks, such as opposite outward dishing thereof, will leave a free space between the respective valve portions. That free space will, however, be completely sealed by seal members extending between the side faces of the respective valve disks.

After separation of the respective coupling halves, the respective coupling halves each retain their ability to close-off and seal the flow passage extending through the associated coupling half.

When the coupling halves are reassembled one to the other, then, rotation of the valve stem associated with one of the coupling halves (or simultaneous rotation of the valve stems associated with both of the coupling halves) will produce rotation of the then "split" valve disk in an entirely usual manner between its closed position and an open position, and subsequently reversely, or forwardly through 360°, to a closed position. The butterfly valve, when the coupling halves are correctly assembled and secured one to the other, thus will operate in a manner no different from that of a conventional butterfly valve.

However, subsequent to closure of the valve embodying the invention, the respective coupling halves can then be detached one from the other, and this in the absence of any definable volume of the conveyed liquid trapped between the respective coupling halves.

In this manner, the present construction moves towards a butterfly valve that can be operated in a single operating motion, that operates as a true dry-break coupling eliminating spillage of the conveyed fluid, and which additionally eliminates all of the complexities of prior known dry-break couplings and the weight penalty and cost disadvantages thereof, while at the same time eliminating the disadvantages of the known ball valve couplings, and also, eliminating the necessity for independently operable dual ball valves as known in the art and the disadvantages resulting from the use of such ball valves.

This elegant simplicity of couplings embodying the invention, as will appear from the following discussion, also provides manifest advantages in the cleaning and servicing of the valve should such actions become necessary.

The center of rotation of the valve disk may lie on the longitudinal axis Z-Z of the coupling, and, the axis of the valve stem will lie in a Y,Z plane. The axis of the valve stem is most preferably positioned in the X,Y plane of the coupling, i.e., a transverse plane perpendicular to the Z-Z axis. If it is so positioned, then, the end faces of the coupling halves will be arranged at an angle to the X, Y plane. However, the end faces of the coupling may be positioned in the X, Y plane, and, the axis of the valve shaft be displaced angularly in the Y-Z plane about the center of rotation of the valve disk.

Where sealing elements such as O-rings seal around the movable valve member parts, preferably these lie substantially in a plane or planes substantially parallel to the rotation axis of the parts. This helps to avoid problems, e.g. circumferential bunching or stretching, with the sealing elements.

The invention also contemplates geometric configurations of the juxtaposed faces of the valve elements that are other than truly planar. Planar surfaces are preferential in that they facilitate the ease of sealing of the valve disks associated with the respective coupling halves. However, any other configuration of severage can be employed, provided that the configuration of severage of one of the coupling members is duplicated identically on the other coupling member, but in mirror image or reverse. The only requirement is that, when the respective coupling halves are correctly presented one to the other, they will assume the configuration of a disk valve.

While it is preferable that the thusly formed side faces of the valve disks, (of which there are now two) are planar, it is not essential that the side faces of the valve disks be truly planar. They can be provided with interlocking excrescences and recesses, and in fact be of any form that will inter-fit upon the correct presentation of the coupling halves one to the other.

As is conventional in the art, the valve disk can be rotatable in spherical surfaces formed in the respective coupling halves, or, as also is usual in the art, they can be rotatable in cylindrical surfaces provided in the respective valve halves.

Further, the respective valve members do not necessarily have to be circular in plan form. They can be of any shape, including that of an ellipse having its major and minor axis passing through the center of rotation of the valve disk, or, in the shape of a square, rectangle, polygon or combinations of rectilinear and curved sides. However, as the couplings of the invention are not in practice produced by splitting a conventional butterfly valve, but instead are formed identically and separately one from the other, the need arises that the configuration on one side of the X-Z plane be duplicated in reverse on the opposite side of that plane. This is because identically formed coupling halves will require rotation of one of the coupling halves through 180° about the X-X axis in order for the respective coupling halves to be presented correctly to each other, and, for them to "mate" with the longitudinal axis of the respective stub shafts or half shaft portions in coaxial alignment with each other.

The manner of securing the coupling halves one to the other can be in any selected manner, including traction bolts, wedging surfaces, toggle clamps etc., that can meet the requirement of the respective coupling halves being secured one to the other with the Z-Z axis of the respective coupling halves coincident and the axis of the respective half shafts coincident and positioned in the Y+Z plane of the assembled coupling.

### Description of the Drawings

The accompanying drawings illustrate preferred embodiments of the present invention.
Figures 1A through 1H are diagrammatic illustrations of valve members providing a composite butterfly valve in accordance with the teachings of the present invention;
Figure 2 is a diagrammatic cross-section through a separable coupling incorporating a butterfly valve embodying the present invention;
Figure 2A is a perspective view similar to Figure 1A, and illustrating the orientation of the respective axes of the separable coupling of Figure 2;
Figure 3 is a diagrammatic cross-section through an alternative form of separable coupling incorporating a butterfly valve;
Figure 3A is a perspective view, similar to Figures 1A and 2A, and which illustrates the relative orientation of the respective axes of the coupling of Figure 3;
Figure 4 is a diagrammatic cross-section through an alternative form of separable coupling embodying the present invention, and which, more particularly, represents a development of the coupling of Figure 2;
Figure 5 is a front view of the separable coupling of Figure 2 or 4;
Figure 6 is a diagrammatic cross-section through a separable coupling, similar to the one illustrated in Figures 2 and 4, and, illustrating a modification of the valve members;
Figure 7 is a perspective view illustrating a side face of one of the valve disk members of Figure 6;
Figure 8 is a front view of a separable coupling according to Figure 6;
Figure 9 is a diagrammatic cross-section through an alternative form of separable coupling embodying the present invention;
Figure 10 is a perspective view showing a side face of one of the valve disk members of Figure 9;
Figure 11 is a diagrammatic illustration of an alternative form of coupling embodying the present invention;
Figure 12 illustrates an alternative form of valve disk;
Figure 13 is a longitudinal cross-section through a preferred form of coupling half embodying the present invention;
Figure 14 illustrates two such coupling members as illustrated in Figure 13, when in properly assembled relation;
Figure 15 is a longitudinal cross-section through an alternative form of separable coupling;
Figure 16 is a longitudinal cross-section through one of the coupling halves of Figure 15; and,
Figure 17 is a view corresponding with Figure 16, and, illustrating the manner in which the valve disk of Figure 16 can be inserted and removed from its associated coupling member.

### Discussion of the Basic Concepts of the Invention

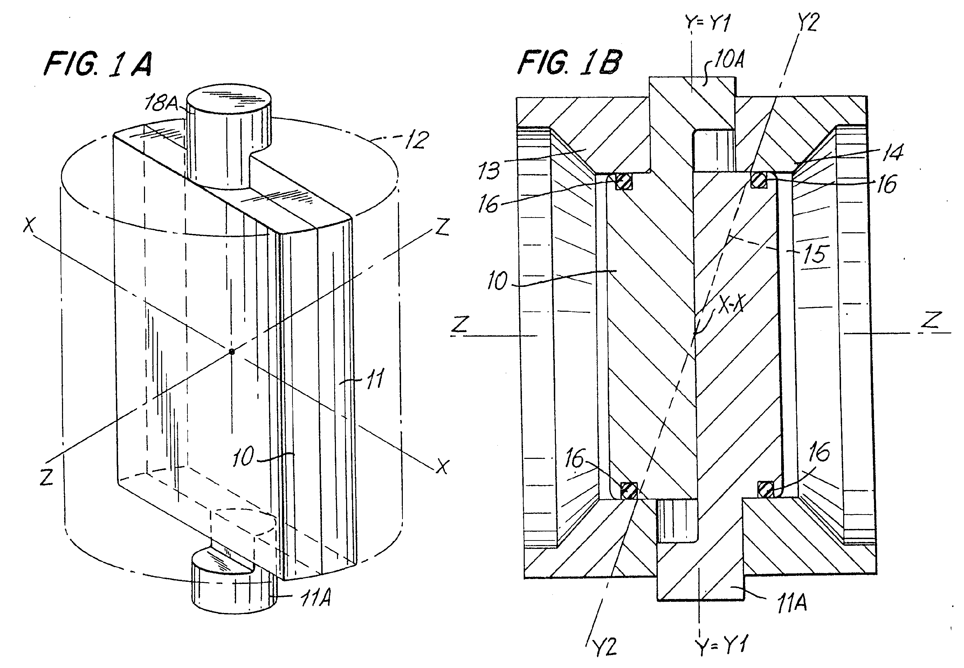

Referring now to Figure 1A, there is illustrated what is possibly the simplest form of the invention, which is that of a hybrid form of cylindrical rotatable plug valve which has been bisected in the X,Y plane.

In Figure 1A, two identical plates 10, 11 of rectangular shape are positioned in face to face relationship, the vertical edges of the plates being curved on the radius of a cylinder 12.

The respective plates 10 and 11 each have a stub shaft 10A, 11A, rigidly affixed to the associated plate 10 or 11 and which is entirely free of the juxtaposed plate. The respective stub shafts are positioned with the longitudinal axis of that shaft coincident with the Y-Y axis of the cylinder 12, and, which is also the axis of revolution of the plates 10 and 11.

The cylinder 12 defines seating and sealing surfaces provided within the respective coupling halves, those surfaces being intersected by the fluid flow passage through the respective coupling halves along the axis Z-Z.

The plates 10 and 11 are shown as planar with their juxtaposed faces extending in the X,Y plane and transverse to the Z axis, i.e., in the closed position of the valve.

If now one of the stub shafts 10A or 11A is rotated, this will cause conjoint rotation of both of the plates 10 and 11 out of the X,Y plane and towards the Y,Z plane, i.e., towards the open position of the valve.

This rotation is readily permitted by the coincidence of the axis of the respective stub shafts with the axis of generation of the cylinder 12.

If now one of the stub shafts 10A is journalled for rotation in one half of a separable coupling, and the stub shaft 11A is journalled for rotation in the other half of the separable coupling as illustrated in 1B, then, upon return movement of the plates 10 and 11 to the initial XY plane, the respective coupling halves, indicated at 13 and 14 in Figure 1B can be removed one from the other with the associated plate 10 or 11 closing the through passage in that coupling member.

As illustrated in Figure 1B, the respective coupling halves 13 and 14 are divided along a plane 15 which is inclined to the X,Y plane. Thus, and as illustrated in Figure 1B, the coupling half 14 with its captive valve member 11 sealing the flow-through port in that member can be removed bodily leaving the flow-through passage of the other coupling half closed by the valve member 10. Conveniently, seal members 16 are interposed between the respective valve members 10 and 11 and their associated coupling halves 13 and 14.

Thus, in the embodiments of Figures 1A and 1B, a construction is arrived at which is that of a rotatable plug valve that has been split vertically to provide two halves of the plug valve, the plug valve being devoid of the usual flow passage extending through a plug valve.

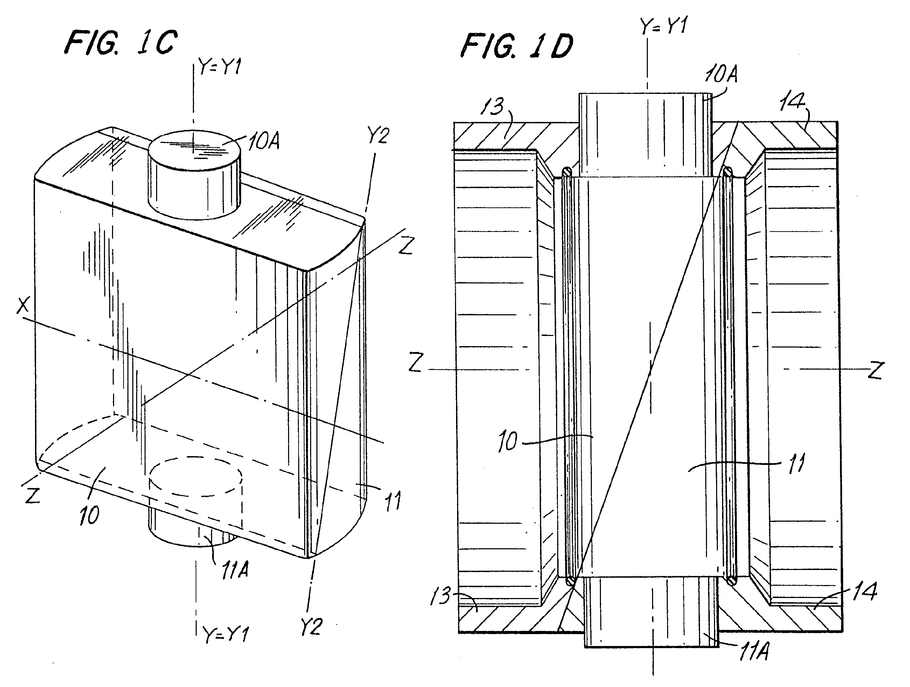

Proceeding further from the concept of Figures 1A and 1B, if the coupling halves are to be split in the X,Y2 plane, then, it is more convenient if the plates also are split in that plane, as illustrated in Figures 1C and 1D in which the same reference numerals have been used to identify to those parts in common with Figures 1A and 1B. Splitting the composite valve, along the X,Y2 plane, results in end faces of the coupling member which are smooth and uninterrupted when the valve is in its closed position, the respective side faces each extending in the same plane as the ends of the coupling halves. Further, this arrangement is far more convenient in that it allows the stub members 10A and 11A to be attached directly to their associated valve members 10 and 11 throughout the entire cross-sectional area of the stub shafts 10A and 11A.

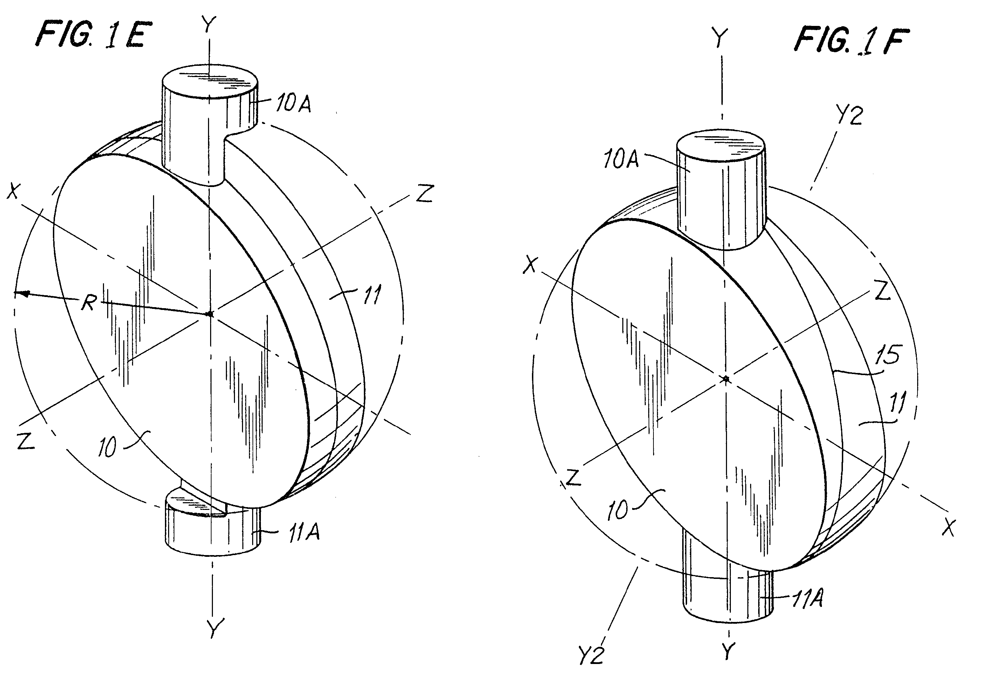

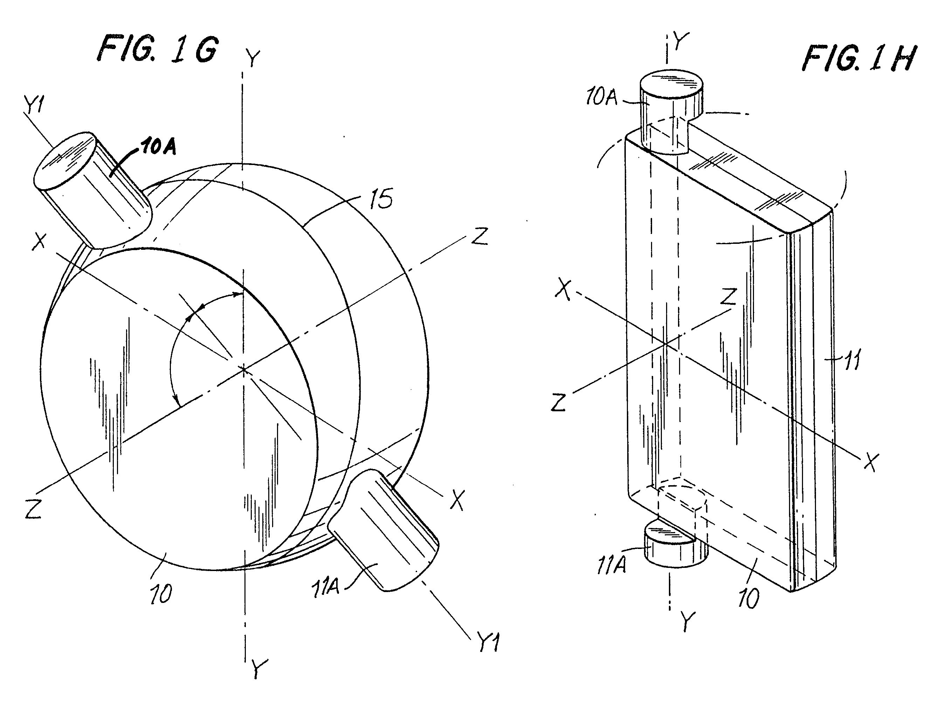

Up to this point, the basic concept has been described with reference to a split cylindrical plug valve having a single radius of curvature generated from the Y-Y axis. The next step in the development of the basic concept is the conversion of the cylindrical form of valve of Figures 1A through 1D into the form of a sphere generated from a radius from the center of the X,Y and Z axes, as illustrated in Figure 1E. Figure 1E illustrates a valve comprised of chords of a sphere, the surface of division lying in the X-Y plane, as it is in Figures 1A and 1B. In Figure 1E and Figures 1F and 1G the same reference numerals have been employed to identify the corresponding parts to those illustrated in 1A through 1D.

The next step in the development of the basic concept is the formation of the chord segment of the sphere along an inclined X-Y2 plane as has been discussed with respect to Figure 1D, to produce the same advantages as those discussed with respect to Figure 1D.

Proceeding now further, and as illustrated in Figure 1G, the axis of the respective stub shafts 10A and 11A, instead of being positioned coincident with the Y-Y axis can be rotated in the Y,Z plane for the previously inclined face 15 of the respective coupling members then to be positioned in the X,Y plane, in this way making a "flat-ended" coupling half in which the end face of the coupling half extends in the X,Y plane and perpendicular to the Z axis.

Proceeding further, and as illustrated in Figure 1H, by removing one side of the valve member of Figure 1A a separable composite flap valve can be provided having all of the attributes of the structure of Figure 1A.

Thus, in basic concept, the invention relates to any solid which is rotatable about an axis, in which the surface of division extends completely within that solid and extends through the periphery only of that solid.

Proceeding now from this discussion of the basic concepts of Figures 1A through 1H, practical embodiments of separable couplings are now discussed which include those concepts.

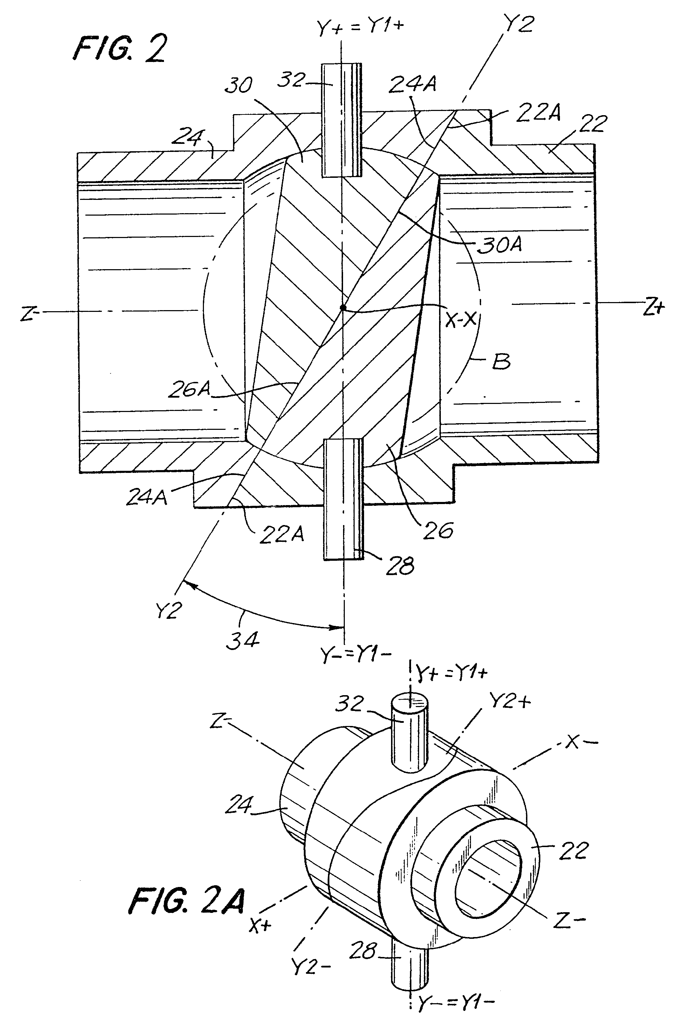

Referring now to Figures 2 and 2A, a separable coupling is provided which includes separable coupling halves 22 and 24, each of which includes a valve, which is so configured that the respective coupling halves can be offered up to each other with their respective closure valves in a closed position, subsequent to which the respective valve halves can be rotated in unison between an open and a closed position.

In Figure 2, one coupling half 22 is provided with a valve disk 26, to which is rigidly attached a stub shaft 28. The other coupling half 24 similarly has a valve disk 30 to which is rigidly attached a stub shaft 32. The stub shafts 28 and 32 are journalled within the respective coupling halves 22 and 24 for rotation about a Y-Y axis which is mutually perpendicular to the X-X axis and Z-Z axis, the Y-Y axis constituting the axis of rotation of the composite valve.

The respective valve members 26 and 30, as illustrated in Figure 2, have respective side faces 26A, 30A, which are arranged in juxtaposition in the assembled condition of the coupling, the side faces being so configured that zero free space exists between those side faces in the assembled condition of the coupling.

Figure 2 illustrates the side faces 26A and 30A as extending in a X,Y2 plane that extends transversely of the coupling and which extends through the X,Y,Z center of rotation of the valve members. While this planar relationship of the side faces is highly preferable, as will later appear, the respective side faces can be other than planar, and, can in fact be of any surface configuration that lies on a medial plane that extends through the chord of a sphere provided by the combined valve members 26 and 30, the medial plane crossing across the Y-Y axis.

Thus, any convenient angle 34 of the X, Y2 plane can be chosen relative to the X,Y plane, provided that it meets the condition that it extends through the periphery only of the chord of a sphere provided by the combined valve disks 26 and 30.

As is indicated by the dotted line B in Figure 2, upon rotation of the composite valve disk through 90°, then, an area of the flow-through passage will be opened, with the composite valve disk intersecting that flow-through passage.

A major requirement of the embodiment of Figure 2 is that the axis of the respective stub shafts 28 and 32 shall be truly coaxial one with the other in the assembled condition of the coupling so that the respective valve members are rotatable about a Y1-Y1 axis coincident with the Y-Y axis. This relationship of the axis of rotation of the respective valve disks 26 and 30 then provides for the chord of a sphere comprised by the combined valve disks 26 and 30 to rotate freely within spherical surfaces provided in the respective coupling halves 22 and 24, which themselves in combination constitute surfaces of a sphere.

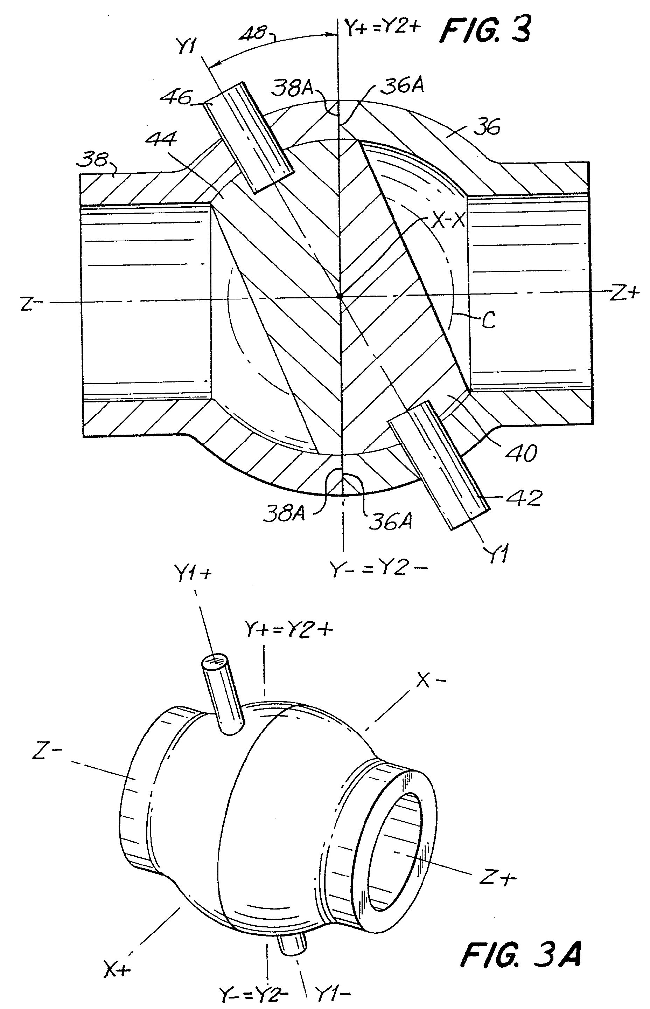

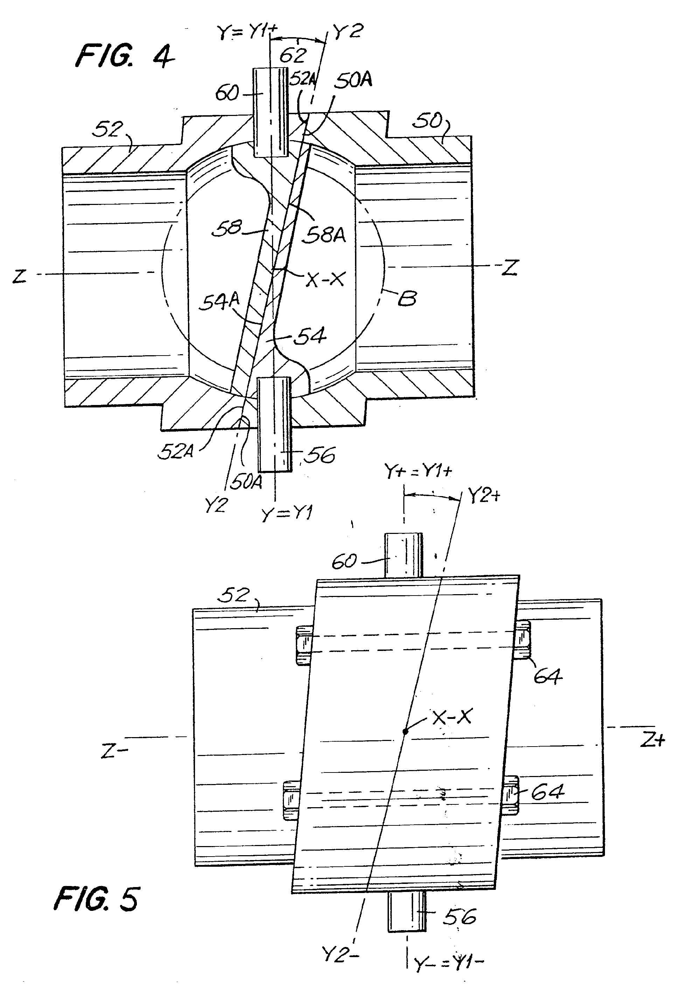

While it is essential that the axis of the respective stub shafts remain coaxial along the Y1-Y1 axis, it is not essential that the Y1-Y1 axis be coincident with the Y-Y axis. The Y1-Y1 axis can be displaced relative to the Y-Y axis, and, the X,Y2 plane can be displaced relative to the X,Y plane, provided that the symmetrical relationship of Figure 5 is preserved. Figures 3 and 3A illustrate such a modification, in which the respective coupling halves 36 and 38 each include a valve member 40 and 44, respectively provided with stub shafts 42 and 46.

As will be observed, in Figure 3 the Y1-Y1 axis has been rotated by an angle 48 in the Y+,Z- plane about the intersection of the X-X, Y-Y and Z-Z axes, and, the X,Y2 plane has been rotated about the intersection of the X-X, Y-Y and Z-Z axes for it to lie in the X,Y plane, thus preserving the same symmetry as in Figure 2.

The embodiment of Figure 3, while providing coupling members having an end surface that extends in the X,Y plane is advantageous in allowing joining by rotation about a convenient Z-Z axis. It also has disadvantages. Firstly, the inclined orientation of the stub shafts is less convenient than the vertical arrangement of stub shafts as shown in Figure 2, in that it will require a special configuration of actuation levers to be attached to the stub shafts 42 and 46. Also, because the chord of the sphere represented by the two valve members 40 and 44 has been displaced angularly about the center of rotation, the diameter of the flow-through passage in the coupling is decreased, as indicated by the dotted lines C in Figure 3.

While some obstruction of the flow-through passage of the coupling will of necessity occur due to the employment of dual valve portions, that obstruction to flow can be very materially reduced by configuring the valve members as illustrated in Figure 4, Figure 4 constituting a further development of the structure shown in Figure 2.

In Figure 4, the coupling members 50 and 52, as in Figure 2, are provided with inclined end faces 50A and 52A arranged in the general X, Y2 plane.

The respective valve members 54 and 58 include mating side faces 54A and 58A, the respective valve members being provided with stub shafts 56 and 60 that are rigidly attached to the associated valve member and which, as in Figure 2, have their longitudinal axis coincident with the Y-Y axis.

The respective valve members 54 and 58 each are cut away in planes extending parallel to the X, Y2 plane, thus reducing the thickness of the combined valve structure, while at the same time preserving the symmetry of Figure 2 in its entirety. As will be observed, as related to the dotted line B representing the flow-through passage of the coupling, a very considerably increased cross-sectional area of the flow-through passage is provided.

Figure 5 diagrammatically illustrates a typical coupling formed from the coupling halves of either Figure 2 or Figure 4. In Figure 5, the coupling is divided along a medial X,Y2 plane arranged at an angle 62 to the Y1-Y1 axis of the respective stub shafts 56 and 60. Conveniently, the respective coupling halves 50 and 52 are held secured one to the other by traction bolts 64. It will be appreciated that the traction bolts 64 represent only one of a multitude of alternative structures by means of which the coupling halves can be secured one to the other.

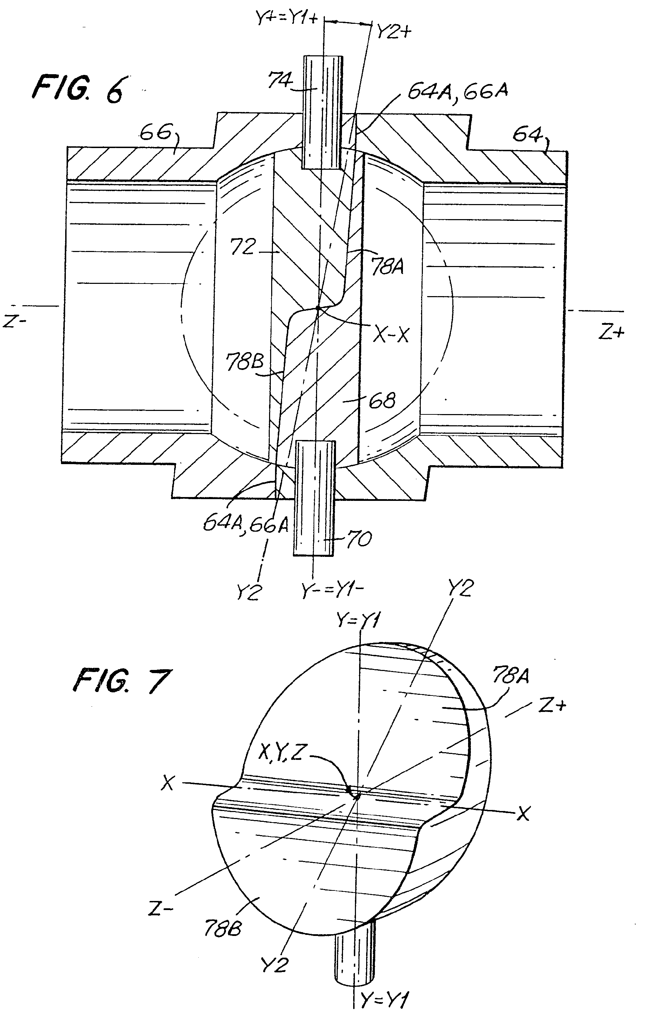

Referring now to Figures 6, 7 and 8, a structure of coupling deriving from Figures 2 and 4 is illustrated, in which the respective coupling halves 64 and 66 are separated along a general X,Y2 plane inclined with respect to the X,Y plane and the Y1 axis, and which meet at end faces 64A and 66A as in the Figure 2 and 4 embodiments.

The respective valve members 68 and 72 are provided with stub shafts 70 and 74 as in the Figure 2 and 4 embodiments, but, the mating side faces of the valve disks are other than in a truly planar relation. Instead, the side faces 78A and 78B of the valve disk are displaced to opposite sides of the X, Y2 plane, the side face portion 78A being displaced in the Z+ direction and the side face 78B being displaced in the Z- direction.

Such a configuration of side faces, while being different to the end faces 64A, 66A of the coupling halves 64 and 66 provides a symmetrical arrangement of the side faces that will interfit one with the other.

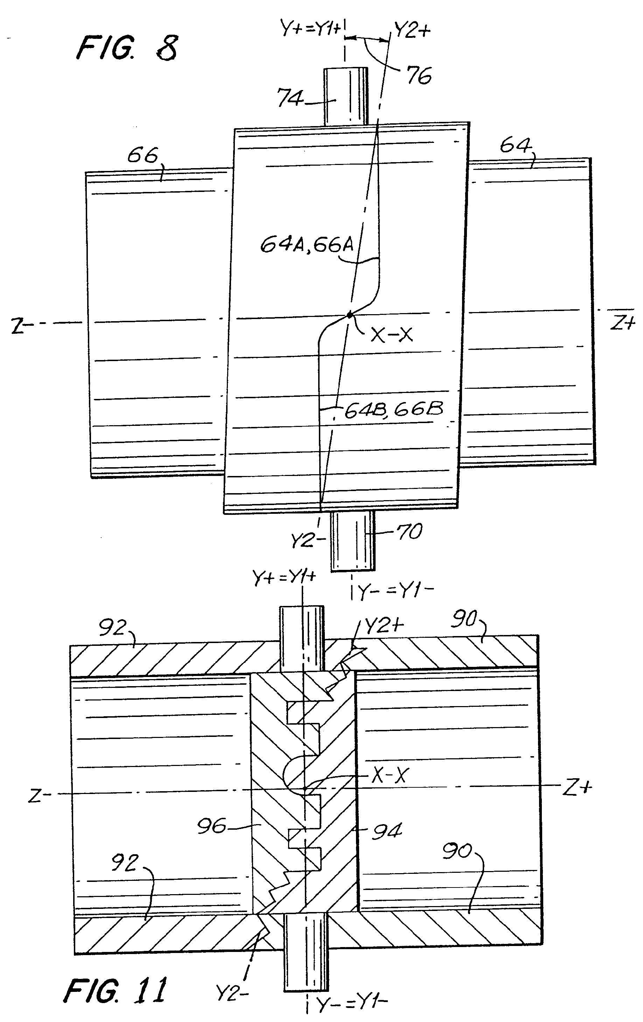

As illustrated in Figure 8, the respective coupling members 64 and 66 themselves have end faces 64A, 66A corresponding in configuration to the configuration of the side faces 78A and 78B of the valve disks of Figure 6. While this may be preferable, it is not essential that the end faces of the coupling members be configured identically with the side faces of the valve disks, for example, the valve disks can be configured as illustrated in Figures 6 and 10, and, the end faces of the coupling members 64 and 66 can be arranged in a sinusoidal surface as indicated by the chain dotted lines 64B, 66B in figure 8.

Figures 9 and 10 correspond generally with Figures 6 and 7, but illustrate a further modification of the valve disks.

In Figures 9 and 10, each of the valve disks 80 and 84 is provided with a stub shaft 82, 86 arranged with its longitudinal axis coincident with the Y-Y axis. The side faces of the respective valve disks 80 and 84 are configured for them to provide an interlocking key and socket configuration, as more clearly illustrated in Figure 10. In Figure 10, the valve disk 80 is shown as having a key 94 projecting from its side face, and, a socket 92 extending into its side face for the reception of a key 88 of the valve disk 84. The keys and sockets in the respective valve disks are arranged symmetrically on opposite sides of the X,Y plane, and act to lock the respective valve members one to the other upon assembly of the coupling and ensure positive positioning of the respective valve members relative to each other.

At this point, it will become clearly apparent that the side faces of the valve members can be of any configuration provided that it will allow for assembly of the respective valve members one to the other with the axis of the respective stub shafts coaxial one with the other. Similarly, the end faces of the coupling members can be configured in such a manner that they will only interfit in one specific position of rotation about their respective longitudinal axis.

Illustrative of this is the diagrammatic representation of Figure 11, in which the end faces of the coupling members 90 and 92 are shown as other than planar, and, the side faces of the respective valve disks 94 and 96 also are shown as dissimilar from each other, but, interfitting.

Further, in Figure 11, the side faces of the respective valve disks at positions intermediate their peripheries can be arranged on opposite sides of a medial plane that includes the X,Y2 plane. Such modifications will, of course, produce asymmetry in the respective coupling halves, in turn dictating that only a specific coupling half can be connected to a corresponding coupling half. This, however, finds utility in certain applications in providing "keyed" couplings that will prevent assembly of a coupling member to all coupling members other than a specifically intended one.

In Figure 12, the end face of a coupling member is indicated at 100, the side face 102 of the associated valve member being elliptical with the major axis of the ellipse lying along the Y-Y axis, and, the minor axis of the ellipse lying along the X-X axis. Such a configuration is symmetrical on each side of the Y-Y axis. Thus, another coupling member when rotated 180° about the X-X axis can be fitted to the first.

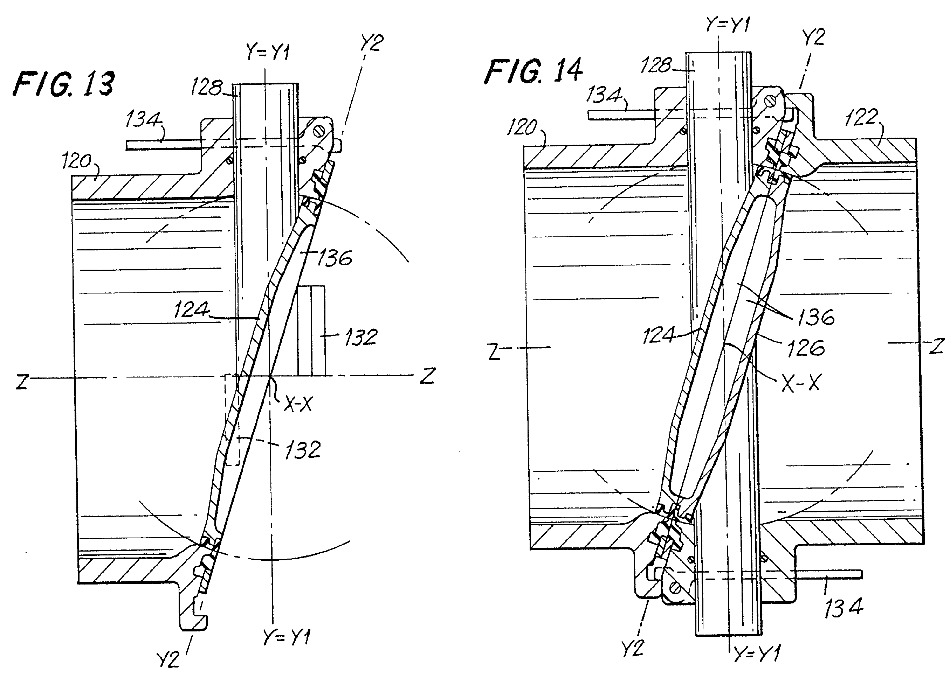

Referring now to Figures 13 and 14, there is illustrated a commercial reduction to practice of the concepts and preferred embodiments previously referred to. In these figures the respective coupling half members are indicated at 120, 122, the respective valve disks are indicated at 124, 126, and, the respective stub shafts are indicated at 128, 130. In this embodiment, the valve disks 124, 126, and also, the operative end faces of the coupling members 120, 122 extend in a plane X,Y2 that is inclined relative to the X,Y plane, the respective stub shafts 128, 130 extending with their longitudinal axis coincident with the Y-Y axis.

In each of these figures, the valve disks are shown in the closed position of the associated coupling half, sealing members being provided at the outer periphery of the respective valve disk portions, and, between the juxtaposed faces of the respective coupling halves.

In this construction, as a result of rotation of the circular disk portions about a common center of revolution, the construction is that of a circular plate moving in a spherical surface.

In Figure 13, latching surfaces 132 are illustrated that will interfit when a pair of coupling halves are correctly presented one to the other and are moved towards each other in the direction of the Y axis. Also, latching members 134 are illustrated which are operative to move the side faces of the coupling halves, and thus the side faces of the valve disk portions into intimate seating relationship one with the other in order to move the respective seals into the required compressed relationship.

While the side faces of the valve portions 124, 126 preferably are planar throughout their entire extent, due to the presence of the sealing members extending between the side faces of the respective valve disk portions, those valve disk portions can be cavitied as at 136, the possibility of conveyed fluid seeping into that cavity while the valve is in the open position being eliminated by the presence of the mutually presented side face seals.

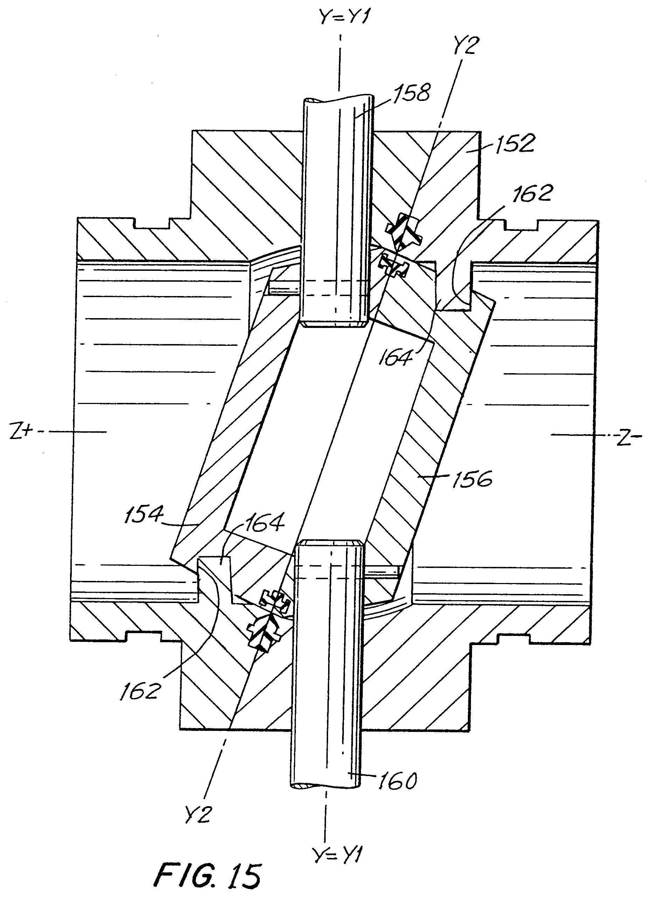

Figures 15 through 17 illustrate another reduction to practice of a coupling according to the present invention.

In Figures 15 through 17, the coupling halves 150, 152 each contain a valve disk portion 154, 156, the respective valve disk portions being secured to stub shafts 158, 160. As will be understood, any convenient manner of turning the stub shafts can be employed. These figures each illustrate valve disk portions that are other than substantially planar disk members, and which are in fact cup shaped members providing a very substantial free volume within the combined valve disk portions. The presence of this free space within the combined valve disk portions is of no consequence, in that seepage into that cavity is prevented by seals extending peripherally of the respective valve disk portions.

Figure 15 illustrates a coupling intended for high pressure uses in which a considerable force may exist at the opposite side faces of the valve disk portions when the valve is in a closed position.

In such applications, the periphery of the respective valve disk portions opposite the associated stub shaft can be provided with an arcuate groove 162 concentric with the axis of the associated stub shaft 158 or 160, and which receives an arcuate key 164 provided on the associated coupling half. As the respective valve portions are moving truly arcuately about the Y-Y axis, the keys 162 can traverse their associated arcuate keyways 164, this providing further support for the respective valve disk portions. It will, however, be noted that the stub shafts 158 and 160 themselves provide abutments minimizing or eliminating displacement of the valve portions in the direction of the Z-Z axis, without regard to which direction the force is applied along the Z-Z axis, i.e., either in the Z+ or in the Z- direction.

Instead of being cavitied, the respective valve portions can be solid, and for certain applications preferably are solid, in order that they present a truly planar face extending in the X-Y2 plane. In this manner, a planar face is provided on the respective coupling members at the time they are separated with the respective valve portions in their closed positions, which greatly facilitates removal from the planar end face of any debris that may have become adhered to that face prior to reassembly of the coupling.

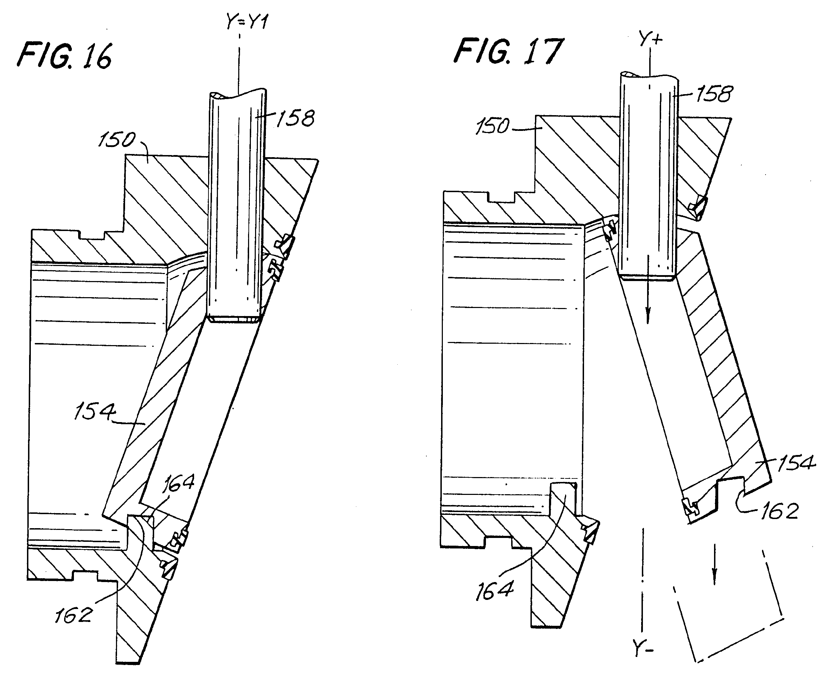

Further, and as illustrated in Figure 17, if servicing of the valve member is required, this can be accomplished with the greatest of ease and facility by rotating the valve portion 154 through an angle of 180° about the axis of its associated stub shaft 158 from the position shown in Figure 16, this providing for complete removal of the disk valve portion 154 and its associated stub shaft 158 by sliding the stub shaft 158 in the Y- direction.

## Claims

1. A valve-controlled dry-break coupling member for forming a coupling connecting a conduit to another such coupling member, and comprising
a body (13,22,50,64,90,120,150) having a fluid passage extending therethrough in a longitudinal coupling direction defining a central Z axis, the body having a transverse end face (22A,50A,64A,100) for complementarily engaging and sealing against a corresponding end face (24A,52A,66A) of a body (14,24,52,66,92,122,152) of the other coupling member in use to form an enclosed conduit;
a movable valve plate (10,26,54,68,80,94,124,154) positioned in the fluid passage and mounted rotatably to the body by a shaft engagement (10A,28,56,70,82,128,158), the rotation axis (Y1) of which passes through a centre of the coupling member where transverse X and Y axes intersect the Z axis, and about which the valve plate is rotatable between
(i) a fully closed transversely-aligned condition in which a sealing periphery of the valve plate seals against the inside of the body to sealingly close the end of the fluid passage, and
(ii) a fully open longitudinally-aligned condition in which flow can occur along the fluid passage around the valve plate,
the valve plate having a side face (15,26A,54A,78B,102) to abut face-to-face against a complementary side face (15,30A,58A,78A) of a corresponding and co-rotatable valve plate (11,30,58,72,84,96,126,156) of said other coupling member, to prevent trapping between them of fluid from the fluid passage and thereby enable a dry break of the coupling,
characterised in that
the rotation axis (Y1) extends in the Y axis direction whereby the valve plate (10,26,54,68,80,94,124,154) rotates a quarter turn between the fully closed and fully open conditions.

2. A coupling member according to claim 1 in which the side face (26A,54A,78B) of the valve plate (26,54,68) is inclined at an acute angle to the Y axis direction.

3. A valve-controlled dry-break coupling member for forming a coupling connecting a conduit to a another such coupling member, and comprising
a body (13,22,36,50,64,90) having a fluid passage extending therethrough in a longitudinal coupling direction defining a central Z axis, the body having a transverse end face (22A,36A,50A,64A,100) for complementarily engaging and sealing against a corresponding end face (24A,38A,52A,66A) of a body (14,24,38,52,66,92) of the other coupling member in use to form an enclosed conduit;
a movable valve plate (10,26,40,54,68,80,94) positioned in the fluid passage and mounted rotatably to the body by a shaft engagement (10A,28,42,56,70,82), the rotation axis (Y1) of which passes through a centre of the coupling member where transverse X and Y axes intersect the Z axis, and about which the valve plate is rotatable between
(i) a fully closed transversely-aligned condition in which a sealing periphery of the valve plate seals against the inside of the body to sealingly close the end of the fluid passage, and
(ii) a fully open longitudinally-aligned condition in which flow can occur along the fluid passage around the valve plate,
the valve plate having a side face (15,26A,54A,78B) to seal face-to-face against a complementary side face (15,30A,58A,78A) of a corresponding and co-rotatable valve plate (11,30,44,58,72,84,96) of said other coupling member, to prevent trapping between them of fluid from the fluid passage and thereby enable a dry break of the coupling,
characterised in that
the shaft rotation axis (Y1) passes through said sealing periphery of the valve plate (10,26,40,54,68,80,94), whereby the valve plate rotates a quarter turn about the rotation axis in passing between the fully open condition and the fully closed condition.

4. A coupling member according to claim 3 in which the end face (36A) of the body (36) extends in the XY plane, perpendicular to the Z-axis.

5. A coupling member according to any one of claims 1 to 3 in which the end face (22A,50A,64A) of the body (13,22,50,64,90,120,150) is inclined to the XY plane.

6. A coupling member according to any one of the preceding claims in which the end face (22A,36A,50A) of the body (13,22,36,50,120,150) is planar.

7. A coupling member according to any one of claims 1, 2, 5 and 6 in which the end face of the body (120,150) carries an elastomeric seal extending around it, for compressive sealing engagement against the corresponding end face of the other coupling member.

8. A coupling member according to any one of the preceding claims in which the valve plate (10,124) carries a peripheral elastomeric seal (16) for sealing between the periphery of the valve plate and the body (13,122) of the coupling member in the closed condition.

9. A coupling member according to any one of the preceding claims in which the valve plate (124,154) has a peripheral elastomeric seal for sealing against the valve plate (126,156) of the other coupling member.

10. A coupling member according to claim 9 in which the side face of the valve plate (124,154) is recessed (136), to define with the valve plate (126,156) of the other coupling member a sealed cavity in the assembled coupling.

11. A coupling member according to any one of claims 1 to 8 in which the side face (15,26A,54A) of the valve plate (10,26,40,54) is flat.

12. A coupling member according to any one of the preceding claims in which, in the closed condition, the side face (15,26A,54A,78B) of the valve plate (10,26,40,54,68,80,94,124,154) is substantially a continuation of the end face (22A,36A,50A,64A) of the body (13,22,36,50,64,90).

13. A coupling member according to any one of the preceding claims in which the shaft engagement mounting the valve plate comprises a stub shaft (10A,28,42,56,70,82,128,158) integral with or rigidly attached to the valve plate and extending outwardly through a hole in the body (13,22,36,50,64,90,120,150).

14. A coupling member according to claim 13 in which in the closed condition an arcuate groove (162) of the periphery of the valve plate (154) diametrically opposite the engagement of the stub shaft (158) with the body (150) engages a projecting arcuate key (164) of the body, to support the valve plate against pressure in the fluid passage.

15. A coupling member according to any one of the preceding claims in which the body (13,120,150) has an elastomeric seal around the fluid passage, to seal between the body (13,120,150) and the periphery of the valve plate (10,124,154) in the closed condition.

16. A coupling member according to any one of the preceding claims in which the body (120) has diametrically opposite socket and bayonet fittings (132) to fit complementary bayonet and socket fittings on the body (122) of the other coupling member in the assembled coupling.

17. A coupling member according to any one of claims 1 to 15 in which the body comprises securing means for securing to the body of the other coupling member.

18. A coupling member according to claim 17 in which the securing means comprises a toggle clamp or holes for traction bolts.

19. A coupling member according to any one of the preceding claims, capable of coupling and co-operating with a said further coupling member which is identical therewith, rotated 180 degrees about the Z-axis.

20. A valve-controlled dry-break coupling comprising two coupling members, each according to any one of the preceding claims, connected together with their respective end faces sealed together and their respective valve plates co-rotatable.

21. A coupling according to claim 20 in which the coupling members are identical.

22. A coupling according to claim 20 or claim 21 in which the side faces (78B,100) of the valve plates (68,72;80,84;94,96) of the coupling members have interfitting keying projections (88,94;102) and recesses (92).

## Patentansprüche

1. Ventilgesteuertes Trockentrennkupplungselement zum Bilden einer Kupplung, die ein Rohr mit einem weiteren derartigen Kupplungselement verbindet und folgendes umfaßt:
einen Körper (13, 22, 50, 64, 90, 120, 150) mit einem Fluiddurchgang, der sich dadurch in einer längsgerichteten Kupplungsrichtung erstreckt, die eine zentrale Z-Achse definiert, wobei der Körper eine quergerichtete Endstirnseite (22A, 50A, 64A, 100) zum komplementären Eingreifen und Abdichten gegen eine korrespondierende Endstirnseite (24A, 52A, 66A) eines Körpers (14, 24, 52, 66, 92, 122, 152) des anderen in Verwendung stehenden Kupplungselements aufweist, um eine geschlossene Rohrleitung zu bilden;
eine bewegliche Ventilplatte (10, 26, 54, 68, 80, 94, 124, 154), die im Fluiddurchgang angeordnet und durch einen Eingriff einer Welle (10A, 28, 56, 70, 82, 128, 158) drehbar am Körper befestigt ist, deren Drehachse (Y1) durch einen Mittelpunkt des Kupplungselements verläuft, wo quergerichtete X- und Y-Achsen die Z-Achse schneiden, und um welche die Ventilplatte zwischen
(i) einem vollständig geschlossenen, quer ausgerichteten Zustand, in dem eine Abdichtungsperipherie der Ventilplatte gegen das Innere der Körpers abdichtet, um das Ende des Fluiddurchgangs dicht zu verschließen, und
(ii) einem vollständig offenen, längs ausgerichteten Zustand drehbar ist, in dem ein Fluß entlang des Fluiddurchgangs um die Ventilplatte herum auftreten kann,
wobei die Ventilplatte eine Seitenfläche (15, 26A, 54A, 78B, 102) aufweist, um Fläche an Fläche gegen eine komplementäre Seitenfläche (15, 30A, 58A, 78A) einer korrespondierenden und gemeinsam drehbaren Ventilplatte (11, 30, 58, 72, 84, 96, 126, 156) des genannten anderen Kupplungselements anzuliegen, um ein Einschließen von Fluid aus dem Fluiddurchgang zwischen ihnen zu verhindern und dadurch eine Trockentrennung der Kupplung zu ermöglichen,
dadurch gekennzeichnet, daß
sich die Rotationsachse (Y1) in der Y-Achsenrichtung erstreckt, wodurch sich die Ventilplatte (10, 26, 54, 68, 80, 94, 124, 154) um eine Vierteldrehung zwischen dem vollständig geschlossenen und dem vollständig offenen Zustand dreht.

2. Kupplungselement nach Anspruch 1, worin die Seitenfläche (26A, 54A, 78B) der Ventilplatte (26, 54, 68) in einem spitzen Winkel zur Y-Achsenrichtung geneigt ist.

3. Ventilgesteuertes Trockentrennkupplungslement zum Bilden einer Kupplung, die ein Rohr mit einem anderen derartigen Kupplungselement verbindet und folgendes umfaßt:
einen Körper (13, 22, 36, 50, 64, 90) mit einem Fluiddurchgang, der sich in längsgerichteter Kupplungsrichtung hindurch erstreckt, die eine zentrale Z-Achse definiert, wobei der Körper eine quergerichtete Endstirnseite (22A, 36A, 50A, 64A, 100) zum komplementären Eingreifen und Abdichten gegen eine korrespondierende Endstirnseite (24A, 38A, 52A, 66A) eines Körpers (14, 24, 38, 52, 66, 92) des anderen in Verwendung stehenden Kupplungselements aufweist, um eine geschlossene Rohrleitung zu bilden;
eine bewegliche Ventilplatte (10, 26, 40, 54, 68, 80, 94), die im Fluiddurchgang angeordnet und durch einen Eingriff einer Welle (10A, 28, 42, 56, 70, 82) am Körper montiert ist, deren Rotationsachse (Y1) durch einen Mittelpunkt des Kupplungselements verläuft, wo quergerichtete X- und Y-Achsen die Z-Achse schneiden und um welche die Ventilplatte zwischen
(i) einem vollständig quer ausgerichteten Zustand, in dem eine Abdichtungsperipherie der Ventilplatte gegen das Innere des Körpers abdichtet, um das Ende des Fluiddurchgangs dicht zu verschließen, und
(ii) einem vollständig längs ausgerichteten Zustand drehbar ist, in dem ein Fluß entlang des Fluiddurchgangs um die Ventilplatte herum auftreten kann,
wobei die Ventilplatte eine Seitenfläche (15, 26A, 54A, 78B) aufweist, um Fläche an Fläche gegen eine komplementäre Seitenfläche (15, 30A, 58A, 78A) einer korrespondierenden und gemeinsam drehbaren Ventilplatte (11, 30, 44, 58, 72, 84, 96) des genannten anderen Kupplungselements abzudichten, um das Einschließen von Fluid aus dem Fluiddurchgang zwischen ihnen zu verhindern und um dadurch eine Trockentrennung der Kupplung zu ermöglichen,
dadurch gekennzeichnet, daß
die Wellenrotationsachse (Y1) durch die genannte Abdichtungsperipherie der Ventilplatte (10, 26, 40, 54, 68, 80, 94) führt, wodurch sich die Ventilplatte beim Übergang zwischen dem vollständig offenen Zustand und dem vollständig geschlossenen Zustand um eine Vierteldrehung um die Rotationsachse dreht.

4. Kupplungselement nach Anspruch 3, worin sich die Endstirnfläche (36A) des Körpers (36) in der zur Z-Achse senkrechten XY-Ebene erstreckt.

5. Kupplungselement nach einem der Ansprüche 1 bis 3, worin die Endstirnfläche (22A, 50A, 64A) des Körpers (13, 22, 50, 64, 90, 120, 150) zur XY-Ebene geneigt ist.

6. Kupplungselement nach einem der vorhergehenden Ansprüche, worin die Endstirnfläche (22A, 36A, 50A) des Körpers (13, 22, 36, 50, 120, 150) planar ist.

7. Kupplungselement nach einem der Ansprüche 1, 2, 5 und 6, worin die Endstirnfläche des Körpers (120, 150) eine sich darum herum erstreckende Elastomerdichtung zum Druckabdichtungseingriff gegen die korrespondierende Endstirnfläche des anderen Kupplungselements trägt.

8. Kupplungselement nach einem der vorhergehenden Ansprüche, worin die Ventilplatte (10, 124) eine periphere Elastomerdichtung (16) zum Abdichten zwischen der Peripherie der Ventilplatte und dem Körper (13, 122) des Kupplungselements im geschlossenen Zustand trägt.

9. Kupplungselement nach einem der vorhergehenden Ansprüche, worin die Ventilplatte (124, 154) eine periphere Elastomerdichtung zum Abdichten gegen die Ventilplatte (126, 156) des anderen Kupplungselements aufweist.

10. Kupplungselement nach Anspruch 9, worin die Seitenfläche der Ventilplatte (124, 154) vertieft ist (136), um mit der Ventilplatte (126, 156) des anderen Kupplungselements einen abgedichteten Hohlraum in der zusammengesetzten Kupplung zu definieren.

11. Kupplungselement nach einem der Ansprüche 1 bis 8, worin die Seitenfläche (15, 26A, 54A) der Ventilplatte (10, 26, 40, 54) flach ist.

12. Kupplungselement nach einem der vorhergehenden Ansprüche, worin im geschlossenen Zustand die Seitenfläche (15, 26A, 54A, 78B) der Ventilplatte (10, 26, 40, 54, 68, 80, 94, 124, 154) im wesentlichen eine Fortsetzung der Endfläche (22A, 36A, 50A, 64A) des Körpers (13, 22, 36, 50, 64, 90) ist.

13. Kupplungselement nach einem der vorhergehenden Ansprüche, worin der die Ventilplatte befestigende Welleneingriff eine Flanschwelle (10A, 28, 42, 56, 70, 82, 128, 158) umfaßt, die einstückig mit oder starr an der Ventilplatte befestigt ist und sich durch ein Loch im Körper (13, 22, 36, 50, 64, 90, 120, 150) nach außen erstreckt.

14. Kupplungselement nach Anspruch 13, worin im geschlossenen Zustand eine gebogene Nut (162) der Peripherie der Ventilplatte (154) diametral gegenüber dem Eingriff der Flanschwelle (158) mit dem Körper (150) in einen vorspringenden gebogenen Keil (164) des Körpers eingreift, um die Ventilplatte gegen Druck im Fluiddurchgang abzustützen.

15. Kupplungselement nach einem der vorhergehenden Ansprüche, worin der Körper (13, 120, 150) eine Elastomerdichtung um den Fluiddurchgang aufweist, um zwischen dem Körper (13, 120, 150) und der Peripherie der Ventilplatte (10, 124, 154) im geschlossenen Zustand abzudichten.

16. Kupplungselement nach einem der vorhergehenden Ansprüche, worin der Körper (120) diametral gegenüberliegende Buchsen- und Bajonettpassungen (132) aufweist, um in komplementäre Bajonett- und Buchsenpassungen auf dem Körper (122) des anderen Kupplungselements in der zusammengesetzten Kupplung zu passen.

17. Kupplungselement nach einem der Ansprüche 1 bis 15, worin der Körper Sicherungsmittel zum Sichern an den Körper des anderen Kupplungselements umfaßt.

18. Kupplungselement nach Anspruch 17, worin das Sicherungsmittel eine Knebelklemme oder Löcher für Zugbolzen umfaßt.

19. Kupplungselement nach einem der vorhergehenden Ansprüche, das fähig ist, mit einem genannten weiteren Kupplungselement zu kuppeln und zusammenzuwirken, das damit identisch ist, wobei es um 180° um die Z-Achse gedreht ist.

20. Ventilgesteuerte Trockentrennkupplung umfassend zwei Kupplungselemente, jeweils gemäß einem der vorhergehenden Ansprüche, die mit ihren jeweils miteinander abgedichteten Endflächen und ihren jeweils miteinander drehbaren Ventilplatten miteinander verbunden sind.

21. Kupplung nach Anspruch 20, worin die Kupplungselemente identisch sind.

22. Kupplung nach Anspruch 20 oder Anspruch 21, worin die Seitenflächen (78B, 100) der Ventilplatten (68, 72; 80, 84; 94, 96) der Kupplungselemente zusammenpassende Keilvorsprünge (88, 94; 102) und Ausnehmungen (92) aufweisen.

## Revendications

1. Elément d'accouplement sans perte commandé par vanne pour former un raccord connectant un conduit à un autre de ces éléments d'accouplement et comprenant
un corps (13, 22, 50, 64, 90, 120, 150) présentant un passage de fluide s'étendant à travers celui-ci suivant une direction longitudinale d'accouplement définissant un axe central Z, le corps présentant une face d'extrémité transversale (22A, 50A, 64A, 100) pour une mise en prise complémentaire et une étanchéité avec une face d'extrémité correspondante (24A, 52A, 66A) d'un corps (14, 24, 52, 66, 92, 122, 152) de l'autre élément d'accouplement utilisé pour former un circuit fermé;
un plateau de vanne mobile (10, 26, 54, 68, 80, 94, 124, 154) positionné dans le passage de fluide et monté à rotation au corps par un engagement d'arbre (10A, 28, 56, 70, 82, 128, 158), dont l'axe de rotation (Y1) passe à travers un centre de l'élément d'accouplement où les axes transversaux X et Y coupent l'axe Z, et autour duquel le plateau de vanne peut tourner entre
(i) un état entièrement fermé aligné transversalement dans lequel une périphérie d'étanchéité du plateau de vanne vient en prise étanche avec l'intérieur du corps pour fermer de manière étanche l'extrémité du passage de fluide, et
(ii) un état entièrement ouvert aligné longitudinalement dans lequel l'écoulement peut se produire le long du passage de fluide autour du plateau de vanne,
le plateau de vanne présentant une face latérale (15, 26A, 54A, 78B, 102) pour buter face à face contre une face latérale complémentaire (15, 30A, 58A, 78A) d'un plateau de vanne correspondant et co-rotatif (11, 30, 58, 72, 84, 96, 126, 156) dudit autre élément d'accouplement pour empêcher que du fluide du passage de fluide soit enfermé entre celle-ci et en permettant ainsi une séparation sans perte du raccord,
caractérisé en ce que l'axe de rotation (Y1) s'étend suivant la direction de l'axe Y par quoi le plateau de vanne (10, 26, 54, 68, 80, 94, 124, 154) fait un quart de tour entre les états entièrement fermé et entièrement ouvert.

2. Elément d'accouplement selon la revendication 1, dans lequel la face latérale (26A, 54A, 78B) du plateau de vanne (26, 54, 68) est inclinée suivant un angle aigu vers la direction de l'axe Y.

3. Elément d'accouplement sans perte commandé par vanne pour former un raccord connectant un conduit à un autre de ces éléments d'accouplement et comprenant
un corps (13, 22, 36, 50, 64, 90) présentant un passage à fluide s'étendant à travers celui-ci suivant une direction longitudinale d'accouplement définissant un axe central Z, le corps présentant une face d'extrémité transversale (22A, 36A, 50A, 64A, 100) pour une mise en prise complémentaire et une étanchéité avec une face d'extrémité correspondante (24A, 38A, 52A, 66A) d'un corps (14, 24, 38, 52, 66, 92) de l'autre élément d'accouplement utilisé pour former un circuit fermé;
un plateau de vanne mobile (10, 26, 40, 54, 68, 80, 94) positionné dans le passage à fluide et monté à rotation sur le corps par une mise en prise avec un arbre (10A, 28, 42, 56, 70, 82), dont l'axe de rotation (Y1) passe à travers un centre de l'élément d'accouplement où les axes transversaux X et Y coupent l'axe Z et autour duquel le plateau de vanne peut tourner entre
(i) un état entièrement fermé aligné transversalement dans lequel une périphérie d'étanchéité du plateau de vanne vient en prise étanche avec l'intérieur du corps pour fermer de manière étanche l'extrémité du passage à fluide, et
(ii) un état entièrement ouvert aligné longitudinalement dans lequel l'écoulement peut se produire le long du passage à fluide autour du plateau de vanne,
le plateau de vanne présentant une face latérale (15, 26A, 54A, 78B) pour établir une étanchéité face à face avec une face latérale complémentaire (15, 30A, 58A, 78A) d'un plateau de vanne correspondant et co-rotatif (11, 30, 44, 58, 72, 84, 96) dudit autre élément d'accouplement pour empêcher que du fluide provenant du passage à fluide soit enfermé entre celles-ci et en permettant ainsi une séparation sans perte du raccord,
caractérisé en ce que l'axe de rotation (Y1) de l'arbre passe à travers ladite périphérie d'étanchéité du plateau de vanne (10, 26, 40, 54, 68, 80, 94), par quoi le plateau de vanne effectue un quart de tour autour de l'axe de rotation en passant entre l'état entièrement ouvert et l'état entièrement fermé.

4. Elément d'accouplement selon la revendication 3, dans lequel la face d'extrémité (36A) du corps (36) s'étend suivant le plan XY, perpendiculairement à l'axe Z.

5. Elément d'accouplement selon l'une des revendications 1 à 3, dans lequel la face d'extrémité (22A, 50A, 64A) du corps (13, 22, 50, 64, 90, 120, 150) est inclinée vers le plan XY.

6. Elément d'accouplement selon l'une des revendications précédentes, dans lequel la face d'extrémité (22A, 36A, 50A) du corps (13, 22, 36, 50, 120, 150) est plane.

7. Elément d'accouplement selon l'une des revendications 1, 2, 5 et 6, dans lequel la face d'extrémité du corps (120, 150) supporte un joint d'étanchéité en élastomère s'étendant autour de celle-ci, pour une mise en prise étanche par compression avec la face d'extrémité correspondante de l'autre élément d'accouplement.

8. Elément d'accouplement selon l'une des revendications précédentes, dans lequel le plateau de vanne (10, 124) supporte un joint d'étanchéité périphérique en élastomère (16) pour établir une étanchéité entre la périphérie du plateau de vanne et le corps (13, 122) de l'élément d'accouplement dans l'état fermé.

9. Elément d'accouplement selon l'une des revendications précédentes, dans lequel le plateau de vanne (124, 154) présente un joint d'étanchéité périphérique en élastomère pour établir une étanchéité avec le plateau de vanne (126, 156) de l'autre élément d'accouplement.

10. Elément d'accouplement selon la revendication 9, dans lequel la face latérale du plateau de vanne (124, 154) est évidée (136), pour définir avec le plateau de vanne (126, 156) de l'autre élément d'accouplement une cavité scellée dans le raccord assemblé.

11. Elément d'accouplement selon l'une des revendications 1 à 8, dans lequel la face latérale (15, 26A, 54A) du plateau de vanne (10, 26, 40, 54) est plate.

12. Elément d'accouplement selon l'une des revendications précédentes, dans lequel, dans l'état fermé, la face latérale (15, 26A, 54A, 78B) du plateau de vanne (10, 26, 40, 54, 68, 80, 94, 124, 154) constitue sensiblement une continuation de la face d'extrémité (22A, 36A, 50A, 64A) du corps (13, 22, 36, 50, 64, 90).

13. Elément d'accouplement selon l'une des revendications précédentes, dans lequel l'engagement d'arbre sur lequel est monté le plateau de vanne comprend un faux arbre (10A, 28, 42, 56, 70, 82, 128, 158) venu de matière ou fixé rigidement au plateau de vanne et s'étendant vers l'extérieur à travers un trou dans le corps (13, 22, 36, 50, 64, 90, 120, 150).

14. Elément d'accouplement selon la revendication 13, dans lequel, dans l'état fermé, une rainure arquée (162) de la périphérie du plateau de vanne (154) opposé diamétralement à la mise en prise du faux arbre (158) avec le corps (150) vient en prise avec une clavette arquée en saillie (164) du corps afin de supporter le plateau de vanne contre une pression dans le passage à fluide.

15. Elément d'accouplement selon l'une des revendications précédentes, dans lequel le corps (13, 120, 150) présente un joint d'étanchéité en élastomère autour du passage à fluide pour établir une étanchéité entre le corps (13, 120, 150) et la périphérie du plateau de vanne (10, 124, 154) dans l'état fermé.

16. Elément d'accouplement selon l'une des revendications précédentes, dans lequel le corps (120) présente des garnitures à manchon à baïonnette (132) diamétralement opposées pour s'adapter à des garnitures à manchon à baïonnette complémentaires sur le corps (122) de l'autre élément d'accouplement dans le raccord assemblé.

17. Elément d'accouplement selon l'une des revendications 1 à 15, dans lequel le corps comprend un moyen de fixation pour fixer le corps de l'autre élément d'accouplement.

18. Elément d'accouplement selon la revendication 17, dans lequel le moyen de fixation comprend un crampon articulé ou des trous pour des boulons de traction.

19. Elément d'accouplement selon l'une des revendications précédentes, apte à l'accouplement et à la coopération avec un autre élément d'accouplement précité qui est identique avec celui-ci, tourné de 180° autour de l'axe Z.

20. Raccord sans perte commandé par vanne comprenant deux éléments d'accouplement, chacun selon l'une des revendications précédentes, connecté ensemble avec leurs faces d'extrémité respectives qui sont scellées ensemble et leurs plateaux de vanne respectifs qui peuvent tourner conjointement.

21. Raccord selon la revendication 20, dans lequel les éléments d'accouplement sont identiques.

22. Raccord selon la revendication 20 ou la revendication 21, dans lequel les faces latérales (78B, 100) des plateaux de vannes (68, 72; 80, 84; 94, 96) des éléments d'accouplement ont des saillies formant clavette s'adaptant les unes aux autres (88, 94; 120) et des évidements (92).
